# EUROPEAN PATENT APPLICATION

(11) **EP 4 333 217 A1**
(43) Date of publication of application: **06.03.2024**
(21) Application number: 21938186.0
(22) Date of filing: 25.04.2021
(51) Int. Cl.: H01R 13/52, H01R 35/00

(54) **ELECTRIC CHARGING PORT AND ELECTRIC VEHICLE**

(71) Applicant: Zhejiang Geely Holding Group Co., Ltd., Hangzhou, Zhejiang 310051 (CN); Geely Automobile Research Institute (Ningbo) Co., Ltd, Ningbo, Zhejiang 315336 (CN)
(72) Inventor: TAN, Huan, Hangzhou Bay New District Ningbo, Zhejiang 315336 (CN); YANG, Yang, Hangzhou Bay New District Ningbo, Zhejiang 315336 (CN); CHEN, Jianxian, Hangzhou Bay New District Ningbo, Zhejiang 315336 (CN); WANG, Yang, Hangzhou Bay New District Ningbo, Zhejiang 315336 (CN); KONG, Xiangxue, Hangzhou Bay New District Ningbo, Zhejiang 315336 (CN); CHEN, Dingfang, Hangzhou Bay New District Ningbo, Zhejiang 315336 (CN)
(74) Representative: 2K Patentanwälte Blasberg Kewitz & Reichel
(86) International application number: PCT/CN2021/089657
(87) International publication number: WO 2022/226694

(57) **Abstract**

The disclosure an electric charging port and electric vehicle, and relates to the technical field of charging devices. The electric charging port includes: a charging port box, a rotation shaft and a sealed box. The charging port box includes two bottom surfaces, multiple side surfaces and at least two charging sockets, and the two charging sockets are located on different side surfaces. The rotation shaft is respectively fixedly connected with the two bottom surfaces. The charging port box is located in the sealed box, and the charging port box is rotatably connected with the sealed box through the rotation shaft. A charging opening is arranged on a side of the sealed box, and a sealing ring is arranged at the charging opening. The charging port of the disclosure is small in size, light in weight, low in cost, simple in structure, good in rigidity and compatibility.

## Description

### TECHNICAL FIELD

The invention relates to the technical field of charging devices, in particular to an electric charging port and an electric vehicle.

### BACKGROUND

With the increasing public awareness of environmental protection, hybrid electric vehicles and electric vehicles have become a new development trend.

The electric vehicle is a kind of electric drive vehicle. Electric vehicles are divided into alternative current electric vehicles and direct current electric vehicles. Generally speaking, electric vehicles use batteries as the energy source, and convert electrical energy into mechanical energy through controllers, motors and other components to control the current and change the speed of the vehicle. The share of electric vehicles in the national economy is not very high. However, it conforms to the national trend of energy conservation and environmental protection, greatly facilitates short-distance transportation, and most importantly plays an important role in the national economy by saving the energy and protecting and the environment.

Hybrid electric vehicles and electric vehicles are generally provided with charging ports. However, most of the charging ports of conventional electric vehicles are exposed to the outside. Although it is convenient for charging, if the exposed charging port is accidentally touched by a metal product or a human body, it will cause burns on the human skin and damage the metal product. At the same time, when the internal battery is maintained and replaced, the conventional charging port is inconvenient to disassemble and the maintenance work is slow. And in the conventional art, for safety and aesthetic considerations, a charging port cover that can be opened and closed is usually provided at the charging port, and when a hybrid vehicle or an electric vehicle needs to be charged, the charging port cover is opened. When charging is complete, the charging port cover is closed to cover the charging port.

At present, the electric charging port cover is a common basin-shaped structure, and there are four ways to open it: electric side flip opening, electric four-link opening, electric internal slide opening and electric rotary opening. The above opening methods of the charging port cover have the following problems: the rigidity of the electric flip opening is poor, and it lacks a sense of technology and fashion; the opening size of the electric four-link opening is enlarged; the internal structure of the electric internal slide opening is complicated, and the size and weight are 3 to 4 times that of other opening, and the price is expensive; and the rigidity and stability of the electric rotary opening are poor.

### SUMMARY

The disclosure provides an electric charging port and electric vehicle so as to solve the problems of the electric charging port cover with complex structure, large opening size, poor rigidity and stability.

The disclosure provides the electric charging port. The electric charging port includes a charging port box, a rotation shaft and a sealed box. The charging port box includes two bottom surfaces, multiple side surfaces and at least two charging sockets, and the two charging sockets are located on different side surfaces. The rotation shaft is respectively fixedly connected with the two bottom surfaces. An inside of the sealed box is a hollow structure, which forms an accommodating cavity. The charging port box is located in the accommodating cavity, and the charging port box is rotatably connected with the sealed box through the rotation shaft. A charging opening is arranged on a side of the sealed box, and a sealing ring is arranged at the charging opening.

In an embodiment of the disclosure, the charging port box is substantially configured as a prism, its cross section is substantially configured as a triangle, and the two charging sockets are located on two different side surfaces of the prism. The charging port box is rotated through the rotating shaft, so that different surfaces of the charging port box may be rotated to the charging opening, so as to realize a conversion of the charging port, or turn off the charging port, which means that the disclosure replaces the opening method of the traditional charging port cover with a method of rotation of three-sided surfaces.

In an embodiment of the disclosure, the triangle is substantially configured as an equilateral triangle. The disclosure uses an equilateral triangle design, each side surface of the prism has a sealing structure, there is no need to arrange a dust cover, which saves costs. And the design of equilateral triangle may arrange fast and slow charging bases at the same time, and it is also compatible with bases of different sizes in different markets.

In an embodiment of the disclosure, the two charging sockets are respectively a fast charging socket and a slow charging socket, and a fast charging base and a slow charging base are respectively arranged in the two charging sockets. In the disclosure, fast and slow chargers are arranged together to reduce the number of boxes, thereby reducing the cost.

In an embodiment of the disclosure, the fast charging socket and the slow charging socket are staggered on the side surface of the charging port box.

In an embodiment of the disclosure, the electric charging port further includes a rotating motor. The rotating motor is arranged on a first end of the rotation shaft and is used to drive the charging port box to rotate, so as to switch the charging socket or turn off the charging socket. The equilateral triangle rotates around the rotation shaft without additional hinges and takes up less space. It has an advantage of small size of the charging base with integrated fast and slow charging.

In an embodiment of the disclosure, the sealed box is a hollow cylinder, the charging opening is arranged on a side surface of the hollow cylinder, and a shape of the charging opening coupled with a shape of the side surface of the charging port box.

In an embodiment of the disclosure, a shape of the sealing ring is adapted to the shape of the charging opening, a first side of the sealing ring is fixedly connected with a box body of the sealed box, and a second side of the sealing ring interferes with the side surface of the charging port box. It unnecessary to use a dustproof cap inside the charging port cover through the above arrangement, which reduces the cost.

The disclosure further provides an electric vehicle, which includes:
a vehicle body,
an electric charging port, arranged in a body cover panel of the vehicle body, which includes:
a charging port box, comprising two bottom surfaces, multiple side surfaces and at least two charging sockets, and the two charging sockets being located on different side surfaces;
a rotation shaft, respectively fixedly connected with the two bottom surfaces; and
a sealed box, a side surface thereof provided with a charging opening, the charging port box being located inside the sealed box and rotatably connected with the sealed box through the rotation shaft, and a sealing ring being arranged at the charging opening.

In an embodiment of the disclosure, the body cover panel is provided with a vehicle body opening at the charging port box, and the charging opening on the sealed box coupled with the vehicle body opening.

In summary, the disclosure is provided with the charging port box, and the charging port box includes multiple side surfaces, which is respectively provided with the fast charging socket or the slow charging socket on different side surfaces, and enables it to rotate with the rotation shaft, so as to change the charging port or realize a sealing and hiding of the charging port. And the equilateral triangle enables it to be possible to arrange fast and slow charging bases on the charging port box at the same time, and is compatible with bases of different sizes in different markets. In addition, a structure of the equilateral triangle rotating around the rotation shaft does not require additional hinges, and takes up less space. It has an advantage of small size of the charging base with integrated fast and slow charging. The charging port of the disclosure is small in size, light in weight, low in cost, simple in structure, good in rigidity and compatibility.

### BRIEF DESCRIPTION OF THE DRAWINGS

In order to explain technical solutions of embodiments of the disclosure more clearly, the following will briefly introduce drawings used in a description of the embodiments. Obviously, the drawings in the following description are only some embodiments of the disclosure. For those of ordinary skill in the art, other drawings may be obtained based on these drawings without creative work.
FIG. 1 is a schematic structural view of an electric charging port in an embodiment of the disclosure.
FIG. 2 is a schematic structural view of a charging port box in an embodiment of the electric charging port of the disclosure.
FIG. 3 is a schematic structural view of another charging port box in an embodiment of the electric charging port of the disclosure.
FIG. 4 is a schematic structural view of a cross section along a radial direction in an embodiment of the electric charging port of the disclosure.
FIG. 5 is a schematic structural view of a cross section along an axial direction in an embodiment of the electric charging port of the disclosure.
FIG. 6 is a schematic structural diagram of a cross section along A-A in FIG. 3.
FIG. 7 is a schematic structural diagram of a cross section along B-B in FIG. 3.
FIG. 8 is a schematic structural view of a sealed box in an embodiment of the electric charging port of the disclosure.
FIG. 9 is a schematic structural view of a sealing ring in an embodiment of the electric charging port of the disclosure.
FIG. 10 is an enlarged structural schematic view at C in FIG. 5.

### PART NUMBER DESCRIPTION

10-charging port box, 11-bottom surface, 12-side surface, 13-charging socket, 131-fast charging socket, 132-slow charging socket, 14- charging socket mounting groove, 20-rotation shaft, 30-sealed box, 31-charging opening, 40-sealing ring, 41-first side, 42-second side, 43-thrid side, 44-fourth side, 121-depression structure, 101-body cover panel.

### DETAILED DESCRIPTION

The following describes the implementation of the disclosure through specific embodiments, and those skilled in the art can easily understand other advantages and effects of the disclosure from the content disclosed in this specification. The disclosure may also be implemented or applied through other different specific embodiments. Various details in this specification may also be modified or changed based on different viewpoints and applications without departing from the disclosure. It should be noted that, in a case of no conflict, following embodiments and features in the embodiments may be combined with each other. It should also be understood that a terminology used in the embodiments of the disclosure is for describing specific implementations, not for limiting a protection scope of the disclosure. Test methods for which specific conditions are not indicated in following examples are usually in accordance with conventional conditions, or in accordance with conditions suggested by each manufacturer.

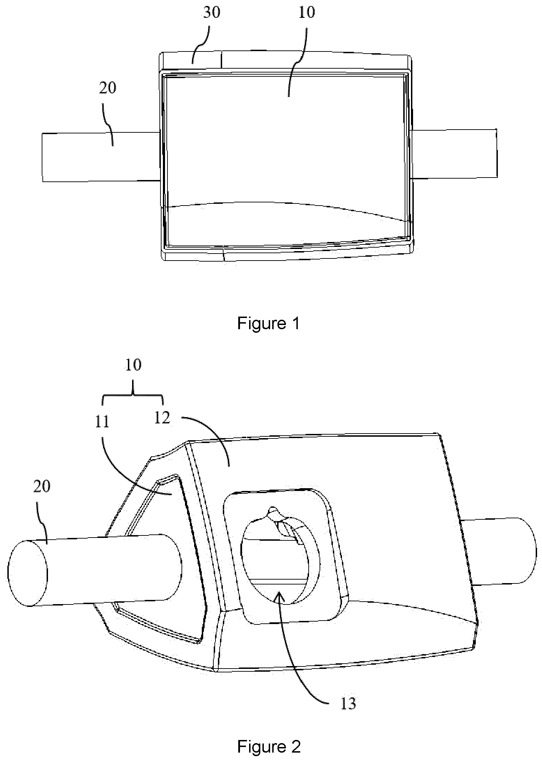

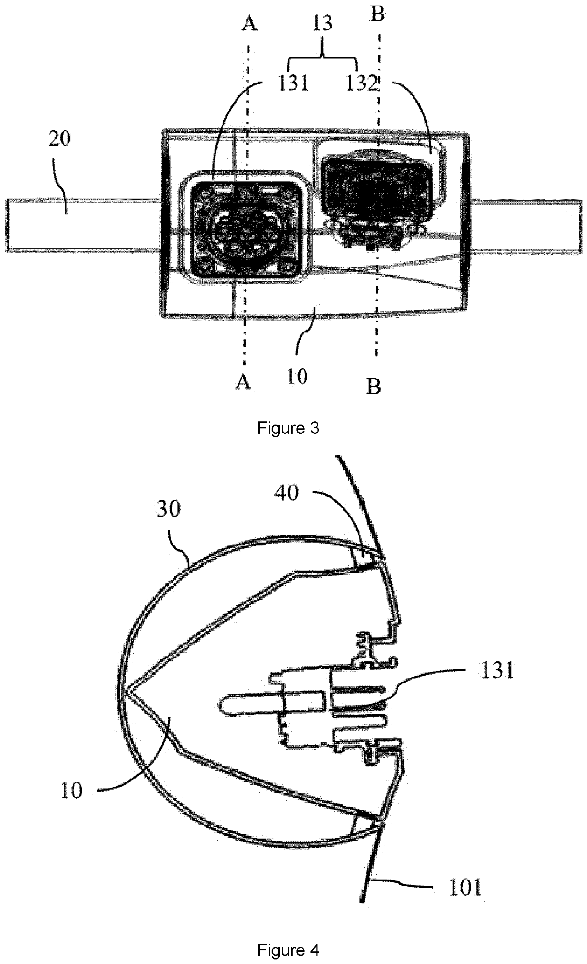

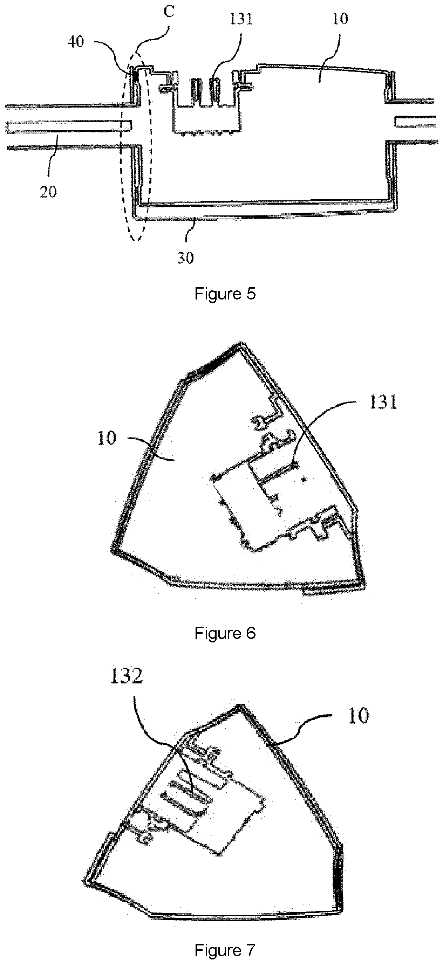

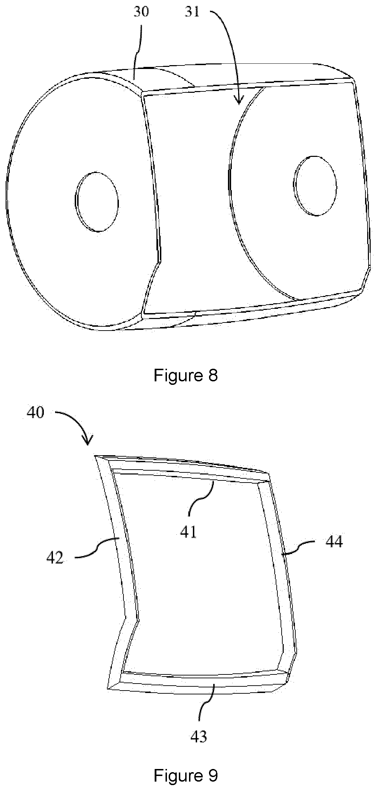

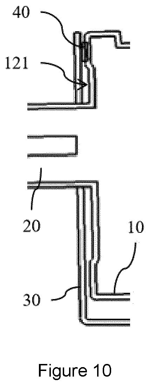

Please refer to FIG. 1 through FIG. 10. It should be noted that the structure, scale, size, etc. of the drawings in this specification are merely for illustration of the disclosed content for understanding and reading by those skilled in the art, and do not intend to limit the restrictive conditions under which the disclosure can be implemented, so it has no technical significance. Any structural modification, proportional relationship change or size adjustment should still be within the scope of the technical content disclosed in the disclosure, without affecting the effects and objectives that can be achieved by the disclosure. At the same time, the terms such as "upper", "lower", "left", "right", "middle" and "one" cited in this specification are only for the convenience of description and are not used to limit the scope of the disclosure. The change or adjustment of the relative relationship should also be regarded as the applicable scope of the disclosure without substantial change in the technical content.

When an embodiment gives numerical ranges, it should be understood that, unless otherwise stated in the disclosure, two endpoints of each numerical range and any value between the two endpoints may be selected. Unless otherwise defined, all technical and scientific terms used in the disclosure are consistent with those skilled in the art's grasp of the prior art and the description of the disclosure, and any method, device and material in the prior art similar or equivalent to the method, device and material described in the embodiments of the disclosure may also be used to realize the disclosure.

Please refer to FIG. 1. The disclosure provides an electric charging port, which is used to solve problems of complex structure, large opening size, poor rigidity and stability of an electric charging port cover. In this embodiment, the electric charging port includes a charging port box 10, a rotation shaft 20, a sealed box 30 and a sealing ring 40.

Please refer to FIG. 1 and FIG. 2. In this embodiment, the charging port box 10 includes two bottom surfaces 11, multiple side surfaces 12 and at least two charging sockets 13, and the two charging sockets 13 are located on different side surfaces of the charging port box 10. Specifically, two different side surfaces of the charging port box 10 are provided with charging socket mounting grooves 14, and the two charging socket mounting grooves 14 are mutually misaligned. The two charging sockets 13 are respectively a fast charging socket 131 and a slow charging socket 132. The fast charging socket 131 and the slow charging socket 132 are mounted in the charging socket mounting grooves 14 on two different side surfaces of the charging port box, bottoms of the fast charging socket 131 and the slow charging socket 132 are respectively provided with a fast charging base and a slow charging base, and the fast charging socket 131 and the slow charging socket 132 are arranged in a misalignment, which effectively saves space, and enables the charging port box 10 to be smaller in size. And through arranging the fast charging socket 131 and the slow charging socket 132 together, the number of charging port boxes 10 is reduced, thereby reducing costs, and being compatible with bases of different sizes in different markets.

Please refer to FIG. 1 and FIG. 2. In this embodiment, the rotation shaft 20 is fixedly connected with the two bottom surfaces 11 respectively, and a rotating motor is mounted at one end of the rotation shaft 20. The charging port box 10 may rotate along with the rotation shaft 20. And the charging socket 13 is used to switch between the fast charging socket 131 and the slow charging socket 132 to adapt to different charging methods or turn off the charging port for sealing and hiding. The disclosure replaces an opening method of a traditional charging port cover with a method of three-sided surfaces rotation. This opening structure is the first, and an appearance is novel and fashionable. There is no need for opening mechanisms such as hinges or slide rails, and a base may be displayed or hidden by rotation. In this embodiment, the charging port box 10 is configured as a prism substantially, and its cross section is configured as a triangle substantially. The two charging sockets 13 are located on two different side surfaces of the triangle, which means that the charging port box 10 is configured as a triangular prism substantially, for example. The rotation shaft 20 is fixed on the two opposite bottom surfaces of the triangular prism 10. The fast charging socket 131 and the slow charging socket 132 are respectively mounted on different side surfaces of the triangular prism, and are mutually misaligned. Specifically, the triangle is preferably an equilateral triangle substantially, and the charging port box 10 is preferably a plastic charging port box to reduce its weight.

Please refer to FIG. 2 through FIG. 7. In this embodiment, the charging port box 10 substantially shaped as the triangular prism is provided with three side surfaces, one of which is not provided with the charging socket 13. When this surface is rotated to a charging opening 31 on the sealed box 30, the charging port is turned off to realize a sealing and hiding of the charging port. The fast charging socket 131 and the slow charging socket 132 are respectively mounted on the remaining two side surfaces. When the rotating motor drives the rotation shaft 20 to rotate, the charging port box 10 rotates with the rotation shaft 20, When the side surface of the charging port box 10 on which the fast charging socket 131 or the slow charging socket 132 is mounted is rotated to the charging opening 31, a fast charging or slow charging may be performed, which means that in this embodiment, when the charging port box 10 is rotated every 120°, the exposed side surface meets a requirement. Without charging, the side surface of the charging port box 10 that is not provided with the charging socket 13 is integrated with an outer surface of a vehicle body, which enables it to be more beautiful. In addition, the disclosure configures the cross-section of the charging port box 10 as an equilateral triangle, and enables each surface to have a self-sealing structure, which eliminates a need for a dust-proof cover, thereby saving costs. The disclosure arrange the fast charging socket 131 or the slow charging socket 132 on different side surfaces of the charging port box 10 to meet user's charging needs and facilitate a mounting of the charging base. It should be noted that an internal space of the prism with an equilateral triangle in cross section needs to accommodate the fast charging base, the slow charging base and turning radius of a wire, and the fast charging base and the slow charging base are arranged in a staggered manner, which may effectively save space. Wiring harnesses of the fast charging base and the slow charging base are drawn from a base rear, and are drawn from the rotation shaft 20 on a side after turning.

Please refer to FIG. 2 through FIG. 8. In this embodiment, the charging port box 10 is arranged inside the sealed box 30, the charging port box 10 is rotatably connected with the sealed box 30 through the rotation shafts 20 at both ends, and a charging opening 31 is arranged on a side surface of the sealed box 30. Specifically, the sealed box 30 is, for example, configured as a hollow cylinder. The charging opening 31 is arranged on a side surface of the hollow cylinder, and a shape of the charging opening 31 matches a shape of the side surface of the charging port box 10. Two bottom surfaces of the hollow cylinder are provided with through holes to connect the rotation shaft 20.

Please refer to FIG. 2 through FIG. 8. In this embodiment, the sealed box 30 is preferably a plastic sealed box body to reduce its weight. It should be noted that the sealed box 30 covers an outside of the charging port box 10 to provide a sealed protection for the charging base, which is dustproof and waterproof. A radius of the sealed box 30 is determined by a side length of a triangular section of the charging port box 10. The sealed box body 30 is fixedly connected with the vehicle body and may not be rotated. The charging port box 10 rotates in the sealed box 30, and the sealed box 30 is not limited to an overall circular structure. As long as the charging opening 31 couples a shape of the charging port box 10, a shape of the rear part may be any shape under a premise of satisfying a rotational envelope gap with the charging port box.

Please refer to FIG. 2 through FIG. 8. In this embodiment, the sealing ring 60 is further arranged at the charging opening 31. A shape of the sealing ring 60 is adapted to the shape of the charging opening 31. And one side of the sealing ring 40 is fixedly connected with a box body of the sealed box 30, and the other side interferes with the side surface of the charging port box 10 to prevent water and dust from entering the sealed box and protect the charging base from water and dust which may causes short circuit or open circuit. In this embodiment, the sealing ring 40 is preferably a sealing rubber strip, and in some other embodiments, the sealing rubber strip may also be replaced by a foaming tube sealing strip or a sealing sponge.

Please refer to FIG. 2 through FIG. 10. In this embodiment, the sealing rubber strip is in a rectangular shape substantially, and is adapted to the shape of the charging opening 31. The rectangular sealing rubber strip includes a first side 41, a second side 42, a third side 43 and a fourth side 44. The first side 41 is opposite to the third side 43, and the second side 42 is opposite to the fourth side 44. The sealing rubber strip is fixed on the sealed box 30. During a rotation of the charging port box 10, the first side 41 and the third side 43 of the sealing rubber strip only come into contact with the charging port box 10 when the charging port box 10 returns, which generates a frictional resistance. However, the second side 42 and the fourth side 44 of the sealing rubber strip will be in contact with the side surface 12 of the charging port box 10 during an entire rotation process, which increases the frictional resistance. In order to reduce the frictional resistance, part of the side surface 12 of the charging port box 10 is designed as a depression structure 121 to reduce part of the frictional resistance.

Please refer to FIG. 1 through FIG. 10. The disclosure further provided an electric vehicle. The electric vehicle includes the electric charging port as in the above embodiment. The electric charging port is arranged in the body cover panel 101 of a body of the vehicle. The body cover panel 101 is provided with an opening of the vehicle body at the charging port box 10. The charging opening 31 on the sealed box 30 matches the opening of the vehicle body to realize a charging of the vehicle and enables an appearance to be more beautiful.

In summary, the disclosure drives the charging port box to rotate along with the rotation shaft, so as to change the charging port or realize the sealing and hiding of the charging port. And the equilateral triangle enables it to be possible to arrange fast and slow charging bases on the charging port box at the same time, and is compatible with bases of different sizes in different markets. In addition, a structure of the equilateral triangle rotating around the rotation shaft does not require additional hinges, and takes up less space. Therefore, the disclosure effectively overcomes some practical problems in the prior art and thus has high utilization value and use significance.

The above-mentioned embodiments merely illustrate the principles and effects of the disclosure, but are not intended to limit the disclosure. Anyone skilled in the art may modify or change the above embodiments without departing from the range of the disclosure. Therefore, all equivalent modifications or changes made by those with ordinary knowledge in the technical field without departing from the range and technic disclosed in the disclosure should still be covered by the claims of the disclosure.

## Claims

1. An electric charging port, comprising:
a charging port box, comprising two bottom surfaces, multiple side surfaces and at least two charging sockets, and the two charging sockets being located on different side surfaces;
a rotation shaft, respectively fixedly connected with the two bottom surfaces; and
a sealed box, the charging port box being located inside the sealed box and rotatably connected with the sealed box through the rotation shaft, a side surface of the sealed box being provided with a charging opening, and a sealing ring being arranged at the charging opening.

2. The electric charging port according to claim 1, wherein
the charging port box is substantially configured as a prism, a cross section thereof is substantially configured as a triangle, and the two charging sockets are located on two different side surfaces of the prism.

3. The electric charging port according to claim 2, wherein
the triangle is substantially configured as an equilateral triangle.

4. The electric charging port according to claim 1, wherein
the two charging sockets are respectively a fast charging socket and a slow charging socket, and a fast charging base and a slow charging base are respectively arranged in the two charging sockets.

5. The electric charging port according to claim 4, wherein
the fast charging socket and the slow charging socket are staggered on the side surface of the charging port box.

6. The electric charging port according to claim 1, further comprising a rotating motor, wherein
the rotating motor is arranged on a first end of the rotation shaft and is used to drive the charging port box to rotate, so as to switch the charging socket or turn off the charging socket.

7. The electric charging port according to claim 1, wherein
the sealed box is a hollow cylinder, the charging opening is arranged on a side surface of the hollow cylinder, and a shape of the charging opening coupled with a shape of the side surface of the charging port box.

8. The electric charging port according to claim 1, wherein
a shape of the sealing ring is adapted to the shape of the charging opening, a first side of the sealing ring is fixedly connected with a box body of the sealed box, and a second side of the sealing ring interferes with the side surface of the charging port box.

9. An electric vehicle, comprising:
a vehicle body,
an electric charging port, arranged in a body cover panel of the vehicle body, comprising:
a charging port box, comprising two bottom surfaces, multiple side surfaces and at least two charging sockets, and the two charging sockets being located on different side surfaces;
a rotation shaft, respectively fixedly connected with the two bottom surfaces; and
a sealed box, the charging port box being located inside the sealed box and rotatably connected with the sealed box through the rotation shaft, a side surface of the sealed box being provided with a charging opening, and a sealing ring being arranged at the charging opening.

10. The electric vehicle according to claim 9, wherein
the body cover panel is provided with a vehicle body opening at the charging port box, and the charging opening on the sealed box coupled with the vehicle body opening.
